# EUROPEAN PATENT APPLICATION

(11) **EP 1 849 818 A1**
(43) Date of publication of application: **31.10.2007**
(21) Application number: 06729878.6
(22) Date of filing: 24.03.2006
(51) Int. Cl.: C08J 5/16, F04B 39/00, C08L 27/12, C08L 79/08, F04C 18/02, F04C 29/00

(54) **COMPOSITION FOR SLIDING MEMBER, SLIDING MEMBER, AND FLUID MACHINE**

(30) Priority: 01.04.2005 JP 2005106623
(71) Applicant: DAIKIN INDUSTRIES, LTD., Osaka-shi, Osaka 530-8323 (JP)
(72) Inventor: TAKEDA, Nobuaki, c/o Daikin Industries Ltd., Sakai-shi, Osaka 5918511 (JP); MIKAME, Daisuke, c/o Daikin Industries Ltd., Sakai-shi, Osaka 5918511 (JP); OHKAWA, Takeyoshi, c/o Daikin Industries Ltd., Settsu-shi, Osaka 5668585 (JP); INOMOTO, Hisashi, c/o Daikin Industries Ltd., Settsu-shi, Osaka5668585 (JP); KINOSHITA, Takuya, c/o Daikin Industries Ltd., Settsu-shi, Osaka 5668585 (JP)
(74) Representative: Goddar, Heinz J.
(86) International application number: PCT/JP2006/305930
(87) International publication number: WO 2006/109511

(57) **Abstract**

In a scroll compressor **(10),** a lubrication part **(70)** is disposed in the slide portion of a cylindrical part **(26)** of a slide bush **(25)** and a projected part **(53)** of an orbiting scroll **(50).** The lubrication part **(70)** has, on the inner peripheral surface of an iron base material thereof, a coat layer composed of a sliding member forming composition. The sliding member forming composition comprises, per 100 parts by weight of polytetrafluoroethylene, (i) 300 parts by weight of polyamide-imide resin; (ii) 75 parts by weight of calcium fluoride as an antiwear agent; (iii) 25 parts by weight of aluminum oxide.

## Description

### TECHNICAL FIELD

The present invention is concerned with sliding member forming compositions, sliding members, and fluid machines.

### BACKGROUND ART

Most of the currently used mechanical apparatuses employ sliding members, e.g., bearings, pistons et cetera. Such a sliding member is required to exhibit a desired degree of mechanical strength and its surface has to have sliding properties or wear resistant properties.

In view of the above, a method of forming on the surface of a sliding member a coat layer composed mainly of fluororesin has been examined with a view to giving, in addition to improved slidability, improved wear resistance to the sliding member.

As a means of improving wear resistance, a coat layer of a sliding member forming composition composed of a fluororesin, a binder, and one type of antiwear agent has been examined (for example, Patent Document I). The coat layer of the sliding member forming composition contains, with respect to the fluororesin, 0.5 percent to 12 percent by volume of the antiwear agent having a Mohs hardness in the range of from 2.0 to 5.0, thereby improving the wear resistance of the sliding member. Especially, fluoride as an antiwear agent having a Mohs hardness in the range of from 2.0 to 5.0, such as calcium fluoride et cetera, is capable of assuredly improving wear resistance, since its solid lubrication properties and moderate mechanical strength are available.
Patent Document I: JP 2000-249063A

### DISCLOSURE OF THE INVENTION

### PROBLEMS THAT THE INVENTION INTENDS TO SOLVE

The aforesaid conventional coat layer as set forth in Patent Document I is able to improve wear resistance because the wear resistant effect of the fluoride is exhibited satisfactorily for the case of a sliding member whose base and partner materials are composed of aluminum alloy. However, the conventional coat layer lacks wear resistance under the severe sliding condition that the base and partner materials are composed of materials of the iron family.

With the above problem in mind, the present invention was made. Accordingly, an object of the present invention is to provide a sliding member forming composition having improved sliding properties and wear resistant properties, a sliding member having on its base material surface a coat layer composed of such a sliding member forming composition, and a fluid machine provided with such a sliding member.

### MEANS FOR SOLVING THE PROBLEM

The present invention provides, as a first aspect, a sliding member forming composition. The sliding member forming composition of the first aspect is formed comprising a fluororesin, a binder, and two or more types of antiwear agents.

Since the sliding member forming composition of the first aspect employs a fluororesin having solid lubrication properties, it has excellent slidability. The sliding member forming composition of the first aspect includes two or more types of antiwear agents, in other words the solid slidability of one antiwear agent is available while the mechanical strength of the other antiwear agent is available.

Stated another way, the inventors of the present invention devoted themselves to study the wear resistant properties of sliding member forming compositions for many years and discovered the above-described addition of two or more types of antiwear agents.

More specifically, there is one conceivable way of improving the wear resistance of a sliding member forming composition. This method uses, as an antiwear agent, a fluoride substitute, e.g., an antiwear particle of high hardness which is superior in mechanical strength to fluoride, with a view to improving the total mechanical strength of the sliding member forming composition.

However, such a high-hardness antiwear particle which is superior in mechanical strength generally has no solid lubricity, thereby representing a problem of increasing the coefficient of friction in the sliding surface of the sliding member. In addition, it is difficult to choose an antiwear agent capable of giving both extremely excellent solid lubricity and extremely excellent mechanical strength.

Therefore, one or more types of antiwear agents having excellent solid lubricity and one or more types of antiwear agents having excellent mechanical strength are mixed with the aforesaid sliding member forming composition at suitable compositional ratios so that both the properties (solid lubricity and mechanical strength) are satisfactorily obtained, thereby improving the wear resistance of the sliding member forming composition.

The present invention provides, as a second aspect according to the first aspect, a sliding member forming composition in which the fluororesin is polytetrafluoroethylene and the binder is polyamide-imide resin.

In the second aspect of the present invention, the coefficient of friction of the sliding member forming composition is lowered and, in addition, the mechanical strength of the sliding member forming composition is improved.

The present invention provides, as a third aspect according to the first aspect, a sliding member forming composition in which at least one of the two or more types of antiwear agents is fluoride and at least another one of the two or more types of antiwear agents is an antiwear particle having a Mohs hardness of greater than 5.

In the third aspect of the present invention, both the solid lubricity of the fluoride and the excellent mechanical strength of the antiwear particle having a Mohs hardness of greater than 5 are effectively available.

The present invention provides, as a fourth aspect according to the third aspect, a sliding member forming composition in which relative to 100 parts by weight of the fluororesin (i) the binder is present in an amount of not less than 100 parts by weight nor more than 500 parts by weight, (ii) the fluoride is present in an amount of not less than 50 parts by weight nor more than 200 parts by weight, and (iii) the antiwear particle is present in an amount of not less than 1 part by weight nor more than 100 parts by weight.

In the fourth aspect of the present invention, the sliding member forming composition contains a fluororesin, thereby improving solid lubricity. Since, relative to 100 parts by weight of the fluororesin, the fluoride is contained, as an antiwear agent, in an amount of not less than 50 parts by weight and the antiwear particle is contained, as an antiwear agent, in an amount of not less than 1 part by weight, this makes it possible to assuredly make effective use of the solid lubricity of the fluoride and the excellent mechanical strength of the antiwear particle.

In addition, since the binder is contained in an amount of not less than 100 parts by weight relative to 100 parts by weight of the fluororesin, the bond strength of the sliding member forming composition is improved by the binder. Furthermore, since, relative to 100 parts by weight of the fluororesin, (i) the binder is contained in an amount of not more than 500 parts by weight, (ii) the fluoride is contained in an amount of not more than 200 parts by weight, and (iii) the antiwear particle is contained in an amount of not more than 100 parts by weight, the solid lubricity of the fluororesin is exhibited satisfactorily.

The present invention provides, as a fifth aspect according to the fourth aspect, a sliding member forming composition in which relative to 100 parts by weight of the fluororesin (i) the binder is present in an amount of 300 parts by weight, (ii) the fluoride is present in an amount of 75 parts by weight, and (iii) the antiwear particle is present in an amount of 25 parts by weight.

In the fifth aspect of the present invention, since, relative to 100 parts by weight of the fluororesin, the fluoride is present in an amount of 75 parts by weight and the antiwear particle is present in an amount of 25 parts by weight, this ensures that both the solid lubricity of the fluoride and the excellent mechanical strength of the antiwear particle are exhibited without fail. In addition, since the binder is present in an amount of 300 parts by weight relative to 100 parts by weight of the fluoride, this ensures that the bond strength of the sliding member forming composition is enhanced by the binder.

The present invention provides, as a sixth aspect according to the third aspect, a sliding member forming composition in which the antiwear particle is aluminum oxide.

In the sixth aspect of the present invention, since the antiwear particle is aluminum oxide, this ensues that the wear resistance of the sliding member forming composition is improved without fail.

The present invention provides, as a seventh aspect, a sliding member which comprises a metal base material having on the surface thereof a coat layer, wherein the coat layer is composed of any one of the sliding member forming compositions as set forth in the first to sixth aspects.

In the seventh aspect of the present invention, since the coat layer of the sliding member forming composition is formed on the base material surface, this provides improved wear resistance in the sliding surface.

More specifically, the seventh aspect of the present invention provides a sliding member which comprises a metal base material having on the surface thereof a coat layer, wherein the coat layer is composed of a sliding member forming composition which includes a fluororesin and two or more types of antiwear agents.

The present invention provides, as an eighth aspect according to the seventh aspect, a sliding member in which the fluororesin is polytetrafluoroethylene and the binder is polyamide-imide resin.

The present invention provides, as a ninth aspect according to the seventh aspect, a sliding member in which at least one of the two or more types of antiwear agents is fluoride and at least another one of the two or more types of antiwear agents is an antiwear particle having a Mohs hardness of greater than 5.

The present invention provides, as a tenth aspect according to the ninth aspect, a sliding member in which relative to 100 parts by weight of the fluororesin (i) the binder is present in an amount of not less than 100 parts by weight nor more than 500 parts by weight, (ii) the fluoride is present in an amount of not less than 50 parts by weight nor more than 200 parts by weight, and (iii) the antiwear particle is present in an amount of not less than 1 part by weight nor more than 100 parts by weight.

The present invention provides, as an eleventh aspect according to the tenth aspect, a sliding member in which relative to 100 parts by weight of the fluororesin (i) the binder is present in an amount of 300 parts by weight, (ii) the fluoride is present in an amount of 75 parts by weight, (iii) the antiwear particle is present in an amount of 25 parts by weight.

The present invention provides, as a twelfth aspect according to the ninth aspect, a sliding member in which the antiwear particle is aluminum oxide.

The present invention provides, as a thirteenth aspect, a fluid machine which comprises any one of the sliding members of the seventh to twelfth aspects.

In the thirteenth aspect of the present invention, in the fluid machine, the wear resistance of the coat layer of the base material surface is improved.

The present invention provides, as a fourteenth aspect according to the thirteenth aspect, a fluid machine in which the sliding member is a bearing member.

In the fourteenth aspect of the present invention, in the bearing member of the fluid machine, the wear resistance of the coat layer of the base material surface is improved.

More specifically, in the thirteenth and fourteenth aspects of the present invention, the coat layer is composed of a sliding member forming composition which comprises a fluororesin, a binder, and two or more types of antiwear agents.

The present invention provides, as a fifteenth aspect according to the fourteenth aspect, a fluid machine in which the fluororesin is polytetrafluoroethylene and the binder is polyamide-imide resin.

The present invention provides, as a sixteenth aspect according to the fourteenth aspect, a fluid machine in which at least one of the two or more types of antiwear agents is fluoride and at least another one of the two or more types of antiwear agents is an antiwear particle having a Mohs hardness of more than 5.

The present invention provides, as a seventeenth aspect according to the sixteenth aspect, a fluid machine in which relative to 100 parts by weight of the fluororesin (i) the binder is present in an amount of not less than 100 parts by weight nor more than 500 parts by weight, (ii) the fluoride is present in an amount of not less than 50 parts by weight nor more than 200 parts by weight, and (iii) the antiwear particle is present in an amount of not less than 1 part by weight nor more than 100 parts by weight.

The present invention provides, as an eighteenth aspect according to the seventeenth aspect, a fluid machine in which relative to 100 parts by weight of the fluororesin (i) the binder is present in an amount of 300 parts by weight, (ii) the fluoride is present in an amount of 75 parts by weight, (iii) the antiwear particle is present in an amount of 25 parts by weight.

The present invention provides, as a nineteenth aspect according to the sixteenth aspect, a fluid machine in which the antiwear particle is aluminum oxide.

### EFFECTS OF THE INVENTION

The sliding member forming composition according to the present invention displays excellent slidability, since it employs a fluororesin having solid lubrication properties. In addition, the sliding member forming composition includes two or more types of antiwear agents, whereby both the solid lubricity of one antiwear agent and the mechanical strength of the other antiwear agent are available. Therefore, even when the base material is a material of the iron family, it is possible to provide improved wear resistance.

Furthermore, according to the second, eighth, and fifteenth aspects of the present invention, the coefficient of friction of the sliding member forming composition is lowered. Further, it becomes possible to provide improved mechanical strength.

In addition, according to the third, ninth, and sixteenth aspects of the present invention, the solid lubricity of the fluoride and the excellent mechanical strength of the antiwear particle having a Mohs hardness of greater than 5 are effectively available, thereby making it possible to improve the wear resistance of the sliding member forming composition.

Furthermore, according to the fourth, tenth, and seventeenth aspects of the present invention, the sliding member forming composition contains a fluororesin, thereby providing improved solid lubrication properties. And, relative to 100 parts by weight of the fluororesin, the fluoride is present, as an antiwear agent, in an amount of not less than 50 parts by weight and the antiwear particle is present, as an antiwear agent, in an amount of not less than 1 part by weight, thereby ensuring that both the solid lubricity of the fluoride and the excellent mechanical strength of the antiwear particle become effectively available. Besides, relative to 100 parts by weight of the fluororesin, the binder is present in an amount of not less than 100 parts by weight, whereby the bond strength of the sliding member forming composition is improved by the binder. Additionally, relative to 100 parts by weight of the fluororesin, (i) the binder is present in an amount of not more than 500 parts by weight, (ii) the fluoride is present in an amount of not more than 200 parts by weight, and (iii) the antiwear particle is present in an amount of not more than 100 parts by weight, thereby making it possible to allow the solid lubricity of the fluororesin to be displayed satisfactorily. As a result, the total wear resistance of the sliding member forming composition can be improved.

Furthermore, according to the fifth, eleventh, and eighteenth aspects of the present invention, relative to 100 parts by weight of the fluororesin, the fluoride is present in an amount of 75 parts by weight and the antiwear particle is present in an amount of 25 parts by weight, thereby ensuring that both the solid lubricity of the fluoride and the strong mechanical strength of the antiwear particle can be displayed without fail. In addition, since the binder is present in an amount of 300 parts by weight relative to 100 parts by weight of the fluororesin, this ensures that the bond strength of the sliding member forming composition is improved by the binder. The above composition improves both solid lubricity and mechanical strength. As a result, it becomes possible to improve the total wear resistance of the sliding member forming composition.

Additionally, according to the sixth, twelfth, and nineteenth aspects of the present invention, the antiwear particle is aluminum oxide, thereby ensuring that the wear resistance of the sliding member forming composition is improved without fail.

Furthermore, according to the seventh aspect of the present invention, the coat layer of the sliding member forming composition is formed on the base material surface, thereby making it possible to improve wear resistance in the slide surface. As a result of this, the durability of the member itself is improved, thereby enabling it to serve for a long period of time.

In addition, according to the thirteenth aspect of the present invention, the wear resistance of the coat layer on the base material surface is improved, thereby making it possible to improve the reliability of the fluid machine itself.

Additionally, according to the fourteenth aspect of the present invention, the wear resistance of the bearing member is improved, thereby making it possible to improve the reliability of the bearing function.

### BRIEF DESCRIPTION OF THE DRAWINGS

Figure **1** is a cross sectional view of a scroll compressor according to a first embodiment of the present invention;
Figure **2** is a schematic diagram for describing a journal test in a refrigerant; and
Figure **3** is a table which represents a relationship between the composition of a sliding member forming composition, the coefficient of friction (µ), and the amount of wear.

### REFERENCE NUMERALS IN DRAWINGS

10: scroll compressor
25: slide bush
26: cylindrical part of slide bush
50: orbiting scroll
53: projected part of orbiting scroll
70: lubrication part

### BEST EMBODIMENT MODE FOR CARRYING OUT THE INVENTION

In the following, an embodiment of the present invention is described in detail with reference to the drawing figures.

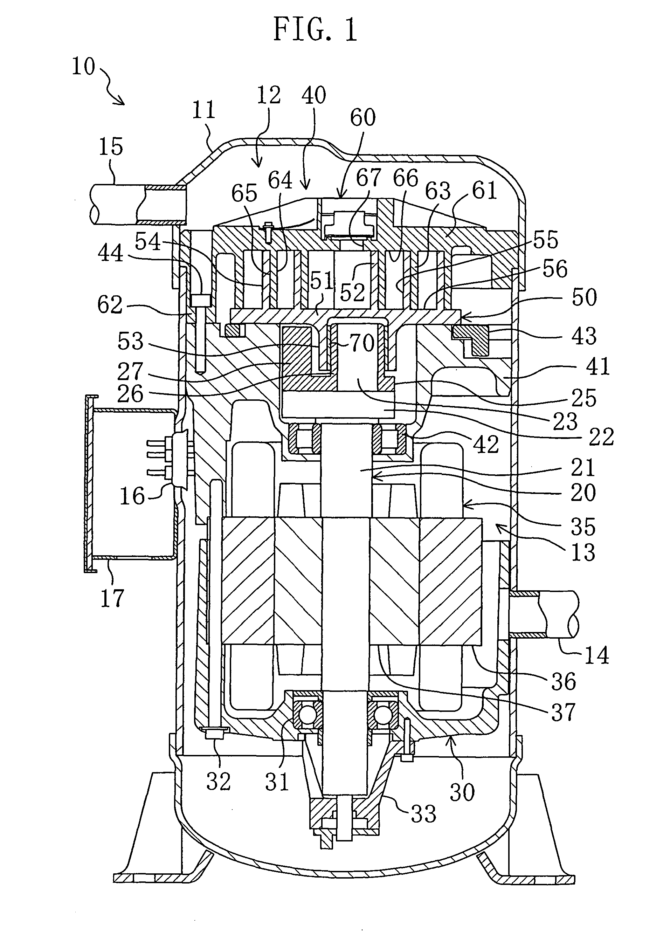

Referring to Figure **1,** there is shown a scroll compressor **(10)** as a fluid machine of the present embodiment. The scroll compressor **(10)** is disposed along a refrigerant circuit of a refrigerating apparatus. The scroll compressor **(10)** is used to compress gas refrigerant fluid.

### OVERALL CONFIGURATION OF THE SCROLL COMPRESSOR

The scroll compressor **(10)** is configured into a so-called hermetical type. The scroll compressor **(10)** is provided with a casing **(11)** which is shaped like a longitudinally oblong, cylindrical, hermetically sealed container. A lower bearing member **(30),** an electric motor **(35),** and a compression mechanism **(40)** are sequentially arranged in a bottom-to-top direction in the casing **(11).** In addition, a driving shaft **(20)** is mounted in the casing **(11),** such that it extends vertically in the casing **(11).**

The interior of the casing **(11)** is divided vertically by a fixed scroll **(60)** of the compression mechanism **(40).** More specifically, the interior of the casing **(11)** is divided into an upper space overlying the fixed scroll **(60)** and serving as a first chamber **(12)** and a lower space underlying the fixed scroll **(60)** and serving as a second chamber **(13).**

A suction pipe **(14)** is attached to the trunk of the casing **(11).** The suction pipe **(14)** opens to the second chamber **(13)** of the casing **(11).** On the other hand, a discharge pipe **(15)** is attached to the upper end of the casing **(11).** The discharge pipe **(15)** opens to the first chamber **(12)** of the casing **(11).**

The driving shaft **(20)** includes a main shaft part **(21),** a rib part **(22),** and an eccentric part **(23).** The rib part **(22)** is formed in the upper end of the main shaft part **(21)** and is shaped like a circular plate having a diameter greater than that of the main shaft part **(21).** On the other hand, the eccentric part **(23)** is provided, in a projecting manner, in the upper surface of the rib part **(22).** The eccentric part **(23)** is shaped like a cylindrical column with a smaller diameter than that of the main shaft part **(21)** and its center of axle is off-centered relative to the center of axle of the main shaft part **(21).**

The main shaft part **(21)** of the driving shaft **(20)** is extended completely through a frame member **(41)** of the compression mechanism **(40).** The main shaft part **(21)** is supported, via a roller bearing **(42),** on the frame member **(41).** In addition, the rib part **(22)** and eccentric part **(23)** of the driving shaft **(20)** are situated in the first chamber **(12)** above the frame member **(41).**

A slide bush **(25)** is attached to the driving shaft **(20).** The slide bush **(25)** has a cylindrical part **(26)** and a balance weight part **(27)** and is placed on the rib part **(22).** The eccentric part **(23)** of the driving shaft **(20)** is rotatably inserted into the cylindrical part **(26)** of the slide bush **(25).**

The lower bearing member **(30)** is positioned in the second chamber **(13)** of the casing **(11).** The lower bearing member **(30)** is firmly fixed to the frame member **(41)** by a bolt **(32).** And, the lower bearing member **(30)** supports, via a ball bearing **(31),** the main shaft part **(21)** of the driving shaft **(20).**

An oil supply pump **(33)** is attached to the lower bearing member **(30).** The oil supply pump **(33)** is engaged with the lower end of the driving shaft **(20).** And, the oil supply pump **(33)** is driven by the driving shaft **(20)** and draws refrigeration oil accumulated on the bottom of the casing **(11).** Refrigeration oil drawn up by the oil supply pump **(33)** is supplied, through a passageway formed in the driving shaft **(20),** to the compression mechanism **(40)** and so on.

The electric motor **(35)** has a stator **(36)** and a rotor **(37).** The stator **(36)** is, together with the lower bearing member **(30),** firmly fixed to the frame member **(41)** by the bolt **(32).** On the other hand, the rotor **(37)** is firmly fixed to the main shaft part **(21)** of the driving shaft **(20).**

A terminal **(16)** for electrical power supply is attached to the trunk of the casing **(11).** The terminal **(16)** is covered by a terminal box **(17).** The electric motor **(35)** is supplied with electrical power through the terminal **(16).**

### CONFIGURATION OF THE COMPRESSION MECHANISM

In addition to the fixed scroll **(60)** and the frame member **(41),** the compression mechanism **(40)** further includes an orbiting scroll **(50)** and an Oldham ring **(43).** And, the compression mechanism **(40)** is configured into a so-called asymmetrical scroll structure.

The orbiting scroll **(50)** has an orbiting-side flat plate part **(51),** an orbiting-side wrap **(52),** and a projected part **(53).** The orbiting-side flat plate part **(51)** is shaped like a somewhat thick circular plate. The projected part **(53)** is formed integrally with the orbiting-side flat plate part **(51)** so that the projected part **(53)** projects outwardly from the lower surface of the orbiting-side flat plate part **(51).** In addition, the projected part **(53)** is positioned approximately centrally in the orbiting-side flat plate part **(51).** The cylindrical part **(26)** of the slide bush **(25)** is inserted onto the projected part **(53).** Stated another way, the orbiting scroll **(50)** is brought into engagement with the eccentric part **(23)** of the driving shaft **(20)** through the slide bush **(25).**

The orbiting-side wrap **(52)** is provided, in a standing manner, on the side of the upper surface of the orbiting-side flat plate part **(51).** The orbiting-side wrap **(52)** is formed integrally with the orbiting-side flat plate part **(51)**. The orbiting-side wrap **(52)** is shaped like a spiral wall of constant height.

The orbiting scroll **(50)** is placed, through the Oldham ring **(43),** on the frame member **(41).** The Oldham ring **(43)** has two pairs of keys. One pair of keys of the Oldham ring **(43)** is engaged with the orbiting-side flat plate part **(51)** of the orbiting scroll **(50)** and the other pair of keys of the Oldham ring **(43)** is engaged with the frame member **(41).** The orbiting scroll **(50)** which engages the eccentric part **(23)** of the driving shaft **(20)** is prevented from executing rotational motion, but it executes orbiting motion. That is, the Oldham ring **(43)** moves while being in slide contact with the orbiting scroll **(50)** and the frame member **(41).**

The fixed scroll **(60)** is provided with a fixed-side flat plate part **(61),** a fixed-side wrap **(63),** and a marginal part **(62).** The fixed-side flat plate part **(61)** is shaped like a somewhat thick circular plate. The diameter of the fixed-side flat plate part **(61)** approximately equals the inside diameter of the casing **(11).** The marginal part **(62)** is shaped like a wall which extends downward from the periphery of the fixed-side flat plate part **(61).** The fixed scroll **(60)** is firmly fixed by a bolt **(44)** to the frame member **(41),** with the lower end of the marginal part **(62)** in abutment with the frame member **(41).** And, by the marginal part **(62)** of the fixed scroll **(60)** coming into close contact with the casing **(11),** the fixed scroll **(60)** divides the interior of the casing **(11)** into the first chamber **(12)** and the second chamber **(13).**

The fixed-side wrap **(63)** is provided, in a standing manner, on the side of the lower surface of the fixed-side flat plate part **(61).** The fixed-side wrap **(63)** is formed integrally with the fixed-side flat plate part **(61).** The fixed-side wrap **(63)** is formed into a spiral wall of constant height and has a length of about three windings.

An inner wrap surface **(64)** and an outer wrap surface **(65),** which are both lateral surfaces of the fixed-side wrap **(63),** move while being in slide contact with an outer wrap surface **(54)** and an inner wrap surface **(55)** which are both lateral surfaces of the orbiting-side wrap **(52).** On the other hand, the top surface of the orbiting-side wrap **(52)** moves while being in slide contact with the lower surface of the fixed-side flat plate part **(61),** i.e., a bottomland **(66)** except the fixed-side wrap **(63),** and the upper surface of the orbiting-side flat plate part **(51),** i.e., a bottomland **(56)** except the orbiting-side wrap **(52),** moves while being in slide contact with the top surface of the fixed-side wrap **(63).** In addition, a discharge opening **(67)** is provided in the vicinity of where the winding of the fixed-side wrap **(63)** starts in the fixed-side flat plate part **(61).** The discharge opening **(67)** is extended completely through the fixed-side flat plate part **(61)** and opens to the first chamber **(12).**

The scroll compressor **(10)** of the present embodiment is disposed along a refrigerant circuit of a refrigerator. Refrigerant is circulated through the refrigerant circuit to thereby perform a vapor compression refrigeration cycle. During that time, the scroll compressor **(10)** draws in low pressure gas refrigerant from an evaporator and compresses same. Then, the scroll compressor **(10)** delivers high pressure gas refrigerant after compression to a condenser.

When the scroll compressor **(10)** is operated, the cylindrical part **(26)** of the slide bush **(25)** and the projected part **(53)** of the orbiting scroll **(50)** slide. In the present embodiment, a lubrication part **(70)** which is a bearing metal is disposed in the slide portion. The lubrication part **(70)** is a cylinder-shaped bearing member. More specifically, the lubrication part **(70)** is a sliding member and its base material is iron, wherein a coat layer as a lubricant layer comprising a sliding member forming composition is formed on the inner peripheral surface of the lubrication part **(70).** The inner peripheral surface of the lubrication part **(70)** to which the lubricant layer is applied slides against the outer peripheral surface of the cylindrical part **(26)** of the slide bush **(25).**

The inner peripheral surface of the base material of the lubrication part **(70)** is surface-roughed by a chemical conversion treatment, such that it has a surface roughness (Ra) of 3.7 µm. Formed on the base material's inner peripheral surface is an about 100 µm-thick lubricant layer which is composed of a mixture of polytetrafluoroethylene (hereinafter referred to as PTFE), polyamide-imide resin (PAI), calcium fluoride (CaF₂) as an antiwear agent, and aluminum oxide (Al₂O₃) as an antiwear agent. Here, the surface roughness Ra is an contour curve's arithmetic average height Ra specified by JIS B 0601-2001. Hereinafter, what is meant by the term "surface roughness Ra" is the JIS arithmetic average height Ra.

By virtue of the provision of the lubrication part **(70)** formed in the way as described above, even when the cylindrical part **(26)** of the slide bush **(25)** and the lubrication part **(70)** slide against each other while being exposed to refrigerant, they are able to keep sliding against each other for an extremely long period of time at a low coefficient of friction.

### EXAMINATION OF THE SLIDE PORTION

In the following, the examination conducted on the lubrication part (70) is described.

Sliding member forming compositions which contain fluoride as an antiwear agent have low coefficients of friction with respect to the metal and are superior in slidability, but they provide poor wear resistance when the base or partner material is a material of the iron family. In view of this, the inventors of the present invention examined whether the wear resistance and the slidability of a coat layer formed of a sliding member forming composition in the base material surface of a sliding member are improved if a fluoride and an antiwear particle having a Mohs hardness of greater than 5 are contained as antiwear agents in the sliding member forming composition.

In the examination, PTFE was used as a fluororesin and PAI was used as a binder. In addition, as a fluoride serving as an antiwear agent, CaF₂ or strontium fluoride (hereinafter referred to as SrF₂) was used, and Al₂O₃ having a Mohs hardness of 9 was used as an antiwear particle having a Mohs hardness of greater than 5. And, in the sliding member forming composition, PTFE is present in an amount of 20 percent by mass, PAI is present in an amount of 60 percent by mass, and the total content of the antiwear agent is 20 percent by mass, and examinations were conducted while making changes in the composition of the antiwear agent.

More specifically, three types of sliding member forming compositions having different composition ratios, i.e., SAMPLE A, SAMPLE B, and SAMPLE C, were examined. Sample A contains, as an antiwear agent, only CaF₂ and has a composition ratio of PTFE/PAI/CaF₂ = 20/60/20). Sample B contains both CaF₂ and Al₂O₃ and has a composition ratio of PTFE/PAI/CaF₂/Al₂O₃ = 20/60/15/5. Sample C contains both SrF₂ and Al₂O₃ and has a composition ratio of PTFE/PAI/SrF₂/Al₂O₃= 20/60/15/5. Note that Samples B and C each comprise per 100 parts by weight of the fluororesin (i) 300 parts by weight of the binder, (ii) 75 parts by weight of the fluoride, and (iii) 25 parts by weight of the antiwear particle.

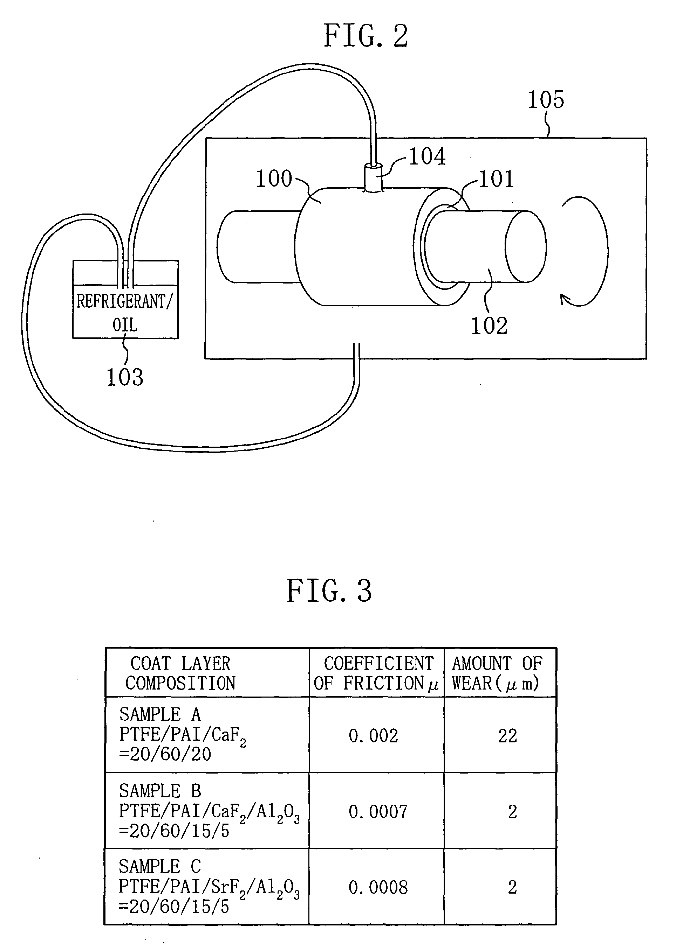

How the examinations were conducted is explained. Journal tests in a refrigerant, as illustrated in Figure **2,** were conducted. R410A was used as refrigerant. As lubricating oil, etheral oil was used. In the first place, a bearing **(100)** composed of an iron material was used. The inner peripheral surface of the base material of the bearing **(100)** was subjected, by chemical conversion using manganese phosphate, to a surface roughening treatment of Ra 3.7 µm. Then, a coat layer **(101)** of a sliding member forming composition formed of a respective sample was applied, as a lubricant layer having a thickness of about 100 µm, onto the inner peripheral surface of the base material of the bearing **(100).** The coat layer **(101)** was formed as follows. That is, after application of the sliding member forming composition, the coat layer **(101)** was subjected to burning and then to surface polishing.

Next, in a pressure container **(105),** a shaft **(102)** composed of SUJ2 (JIS G4805-1990) was passed completely through the bearing **(100),** and the shaft **(102)** was rotated at a predetermined speed. In addition, while forcibly supplying a refrigerant/lubricating oil mixture (volume ratio: 65 : 35) to the bearing **(100)** from a container **(103)** via an oil supplying part **(104),** the mixture in the compressor **(105)** was recovered for circulation. In the test, the slide speed of the shaft **(102)** with respect to the bearing **(100)** was 3m/s, and the bearing **(100)** was made stationary by application of a load of 6 Mpa to the bearing **(100)** and was held for one hour. Thereafter, the amounts of wear undergone by the coat layers **(101)** of the three different samples were compared with each other for estimating their wear resistance. In addition, the coefficient of friction (µ) between each of the coat layers **(101)** of the three different sliding member forming compositions and the shaft **(102)** during the rotation of the shaft **(102)** at the predetermined speed was measured.

Figure **3** shows results of the journal tests in the refrigerant. The amount of wear undergone by Sample A which contains as an antiwear agent only CaF₂ is 22 µm. The amount of wear undergone by Sample B which contains both CaF₂ and Al₂O₃ is 2 µm. The amount of wear undergone by Sample C which contains both SrF₂ and Al₂O₃ is 2 µm. These test results show that Samples B and C containing fluoride and Al₂O₃ undergo less wear and are superior in wear resistance.

In addition, the coefficient of friction (µ) of Sample A which contains as an antiwear agent only CaF₂ is 0.002. The coefficient of friction (µ) of Sample B which contains both CaF₂ and Al₂O₃ is 0.0007. The coefficient of friction (µ) of Sample C which contains both SrF₂ and Al₂O₃ is 0.0008. These test results show that, even for the case of Samples B and C whose fluoride content in the antiwear agent is less than that of Sample A, the solid lubricity of the fluoride is displayed and the coefficient of friction is inhibited from increasing.

As can be obviously seen from the above results, by formation of a coat layer of Sample B or C which contains, as antiwear agent, fluoride and Al₂O₃ on the base material surface of a sliding member in an lubricant oil-employing refrigerant, it becomes possible to reduce the amount of wear and improve wear resistance. In addition, Samples B and C which contain, as antiwear agent, both fluoride and Al₂O₃ display excellent slide performance because of their low coefficient of friction, and sliding can be maintained for long periods of time.

As described above, by formation of a coat layer of a sliding member forming composition, which contains as antiwear agent both fluoride and Al₂O₃ and which has a composition ratio of PTFE/PAI/fluoride/Al₂O₃ = 20/60/15/5, on the sliding member base material surface, excellent wear resistance is displayed even when the base or partner material is a material of the iron family. In view of this, a coat layer having a composition ratio of PTFE/PAI/CaF₂/Al₂O₃ = 20/60/15/5 is formed on the inner peripheral surface of the lubrication part (70).

### OTHER EMBODIMENTS

The sliding member forming composition of each of Samples B and C in the above-described embodiment has a composition ratio: PTFE/PAI/fluoride/Al₂O₃ = 20/60/15/5. In other words, relative to 100 parts by weight of PTFE, (i) PAI is present in an amount of 300 parts by weight, (ii) the fluoride is present in an amount of 75 parts by weight, and (iii) Al₂O₃ is present in an amount of 25 parts by weight. However, the composition ratio of the sliding member forming composition of the present invention is not limited to the aforesaid numeric value. That is to say, any composition ratio suffices if the solid lubricity of PTFE, the solid lubricity of fluoride as an antiwear agent, the excellent mechanical strength of aluminum oxide, and the bond strength of PAI as a binder are all displayed. More specifically, any sliding member forming composition suffices if, relative to 100 parts by weight of PTFE, (i) PAI is present in an amount of not less than 100 parts by weight nor more than 500 parts by weight, (ii) fluoride is present in an amount of not less than 50 parts by weight nor more than 200 parts by weight, and (iii) Al₂O₃ is present in an amount of not less than 1 part by weight nor more than 100 parts by weight.

In addition, in the above-described embodiment, CaF₂ and SrF₂ are used as fluoride. However, magnesium fluoride, for example, may be used as fluoride. The fluoride of the present invention is not limited to these fluorides. In addition, in the above-described embodiment, Al₂O₃ is used as an antiwear particle having a Mohs hardness of greater than 5. However, various types of antiwear particles such as oxide (e.g., zirconium oxide and silicon oxide) and silicon nitride may be used. The antiwear particle of the present invention is not limited to these compounds.

Furthermore, in the above-described embodiment, the sliding member forming composition is mixed with one type of fluoride and one type of antiwear particle. However, it suffices if the sliding member forming composition contains at least one or more types of fluorides and one or more types of antiwear particles. For example, the sliding member forming composition may contain (other fluoride and antiwear particle) one or more types of antiwear agents having solid lubricity and one or more types of antiwear agents which are superior in mechanical strength at composition ratios capable of effectively displaying their solid lubricity and mechanical strength.

And, as fluororesin, tetrafluoroethylene-hexafluoropropylene copolymer resin and other resins may be used in addition to PTFE. The fluororesin of the present invention is not limited to these fluororesins. In addition, by virtue of the use of PAI as binder, the properties of PAI, such as excellent impact resistance and high hardness, become available, thereby improving the impact resistance and wear resistance of the solid member forming composition. It should, however, be noted that other than PAI may be used as binder. For example, polyamide resin et cetera having the same properties as PAI may be used. The binder of the present invention is not limited to these binders.

In the above-described embodiment, the lubrication part **(70)** which is a bearing metal is provided in the slide portion of the cylindrical part **(26)** of the slide bush **(25)** and the projected part **(53)** of the orbiting scroll **(50).** Alternatively, it may be arranged such that, without provision of the bearing metal **(70),** the cylindrical inner surface of the projected part **(53)** of the orbiting scroll **(50)** is surface-roughened by direct chemical conversion and a coat layer, composed of a sliding member forming composition having a composition ratio according to the above-described embodiment: PTFE/PAI/fluoride/Al₂O₃ = 20/60/15/5, is formed on the roughened surface. Furthermore, it may be arranged such that the coat layer is directly formed on the outer peripheral surface of the cylindrical part **(26)** of the slide bush **(25).** This therefore eliminates the need for providing the lubrication part **(70)** as a separate part, thereby accomplishing manufacturing simplification and cost reduction.

In addition, the sliding member forming composition having a composition ratio: PTFE/PAI/fluoride/Al₂O₃ = 20/60/15/5 can be applied to other than the slide portion of the cylindrical part **(26)** of the slide bush **(25)** and the projected part **(53)** of the orbiting scroll **(50).** For example, the same effects are obtained by coating a wide variety of sliding members with the sliding member forming composition in various applications.

More specifically, the lower surface of the orbiting-side flat plate part **(51)** of the orbiting scroll **(50)** slides against the upper surface of the frame member **(41)** and against the upper surface of the Oldham ring **(43).** Therefore, it may be arranged such that a coat layer, composed of a sliding member forming composition having a composition ratio: PTFE/PAI/fluoride/Al₂O₃ = 20/60/15/5, is formed on the lower surface of the orbiting-side flat plate part **(51)** of the orbiting scroll **(50).** In addition, the coat layer may be formed all over the orbiting scroll **(50).**

Since the opposing surfaces of the orbiting and fixed scrolls **(50, 60)** slide against each other, it may be arranged such that a coat layer, composed of a sliding member forming composition having a composition ratio: PTFE/PAI/fluoride/Al₂O₃ = 20/60/15/5, is formed on the orbiting-side wrap **(52)** of the orbiting scroll **(50),** i.e., the inner wrap surface **(55),** outer wrap surface **(54)** and top surface of the orbiting-side wrap (52). In addition, the coat layer may be formed on surfaces of the fixed-side wrap **(63)** of the fixed scroll **(60)** opposite to the orbiting scroll **(50),** i.e., the inner wrap surface **(64),** outer wrap surface **(65),** and top surface of the fixed-side wrap **(63).** This therefore improves the sealability in the opposing surfaces of the orbiting and fixed scrolls **(50, 60).** As a result, the reliability of the fluid machine of the present invention serving as a compressor is improved.

In addition, the Oldham ring **(43)** slides against the lower surface of the orbiting-side flat plate part **(51)** of the orbiting scroll **(50).** The main body and the other pair of keys of the Oldham ring **(43)** slide against the frame member **(41).** Accordingly, it may be arranged such that a coat layer, composed of a sliding member forming composition having a composition ratio: PTFE/PAI/fluoride/Al₂O₃ = 20/60/15/5, is formed on the surface of the Oldham ring **(43).** And, in the above-described embodiment, the orbiting scroll **(50)** is placed, through the Oldham ring **(43)**, on the frame member **(41)**. However, in the case where the orbiting scroll **(50)** is placed, through the Oldham ring **(43)** and a thrust bearing, on the frame member, the coat layer may be formed on the upper surface of the thrust bearing, since the upper surface of the thrust bearing and the lower surface of the orbiting-side flat plate part **(51)** of the orbiting scroll **(50)** slide against each other.

In addition, in the above-described embodiment, the main shaft part **(21)** is supported via the roller bearing **(42)** and the ball bearing **(31)** which act as slide parts. However, the main shaft part **(21)** may be supported by a journal bearing which is a sliding bearing. In such a case, a coat layer, composed of a sliding member forming composition having a composition ratio: PTFE/PAI/fluoride/Al₂O₃ = 20/60/15/5, is formed in the slide portion of the main shaft part **(21)** and the bearing. In other words, the coat layer may be formed on either the outer peripheral surface of the main shaft part **(21)** or the inner peripheral surface of the bearing.

Additionally, in the above-described embodiment, the aforesaid coat layer, composed of a slide member forming composition having a composition ratio: PTFE/PAI/fluoride/Al₂O₃ = 20/60/15/5, is formed in the sliding member of the scroll compressor **(10).** However, the compressor of the present invention is not limited to the scroll type. The compressor of the present invention may be any type of compressor used for fluid compression. The fluid is not limited to the refrigerant. Moreover, the sliding member of the present invention is not limited to the sliding member of the compressor. The sliding member of the present invention includes any member as long as it is a sliding part, e.g., a sliding member of the fluid machine other than the compressor and driving and rotating parts of the vehicle and manufacturing equipment.

In the slide portion, the aforesaid coat layer, composed of a slide member forming composition having a composition ratio: PTFE/PAI/fluoride/Al₂O₃ = 20/60/15/5, may be formed on either one of two members which slide against each other or both of them.

In addition, the way of surface-roughening the base material is not limited to the chemical conversion treatment. For example, various known methods such as sandblast treatment may be employed. In addition, as an agent used in the chemical conversion treatment, other than manganese phosphate may be employed. For example, other phosphates and known chemicals may be used.

In addition, the coat layer of the sliding member forming composition may contains, in addition to the major component made up of fluororesin, binder, and CaF₂, pigment, e.g., carbon as an artificial color, and other additive agents. The amount of addition of the additive agent is set to such a level that the performance, such as the wear resistance of a layer containing a sliding member forming composition and the adhesion to the base material, is not adversely affected. For example, carbon as an additive agent has to be set in an amount of not more than 3 percent by mass of fluororesin, preferably not more than 1 percent by mass, and more preferably not more than 0.5 percent by mass.

In addition, the thickness of the coat layer of the sliding member forming composition is preferably not less than 35 µm nor more than 120 µm. If the coat layer thickness is less than 35 µm, this leads to poor sliding performance. If the coat layer thickness exceeds 120 µm, this increases costs. Preferably, the coat layer thickness is not less than 50 µm nor more than 105 µm when taking into consideration the slide performance and the cost. Note that the coat layer thickness here is an average thickness, in other words, the coat layer may locally have a thickness outside such a range.

It should be noted, however, that the aforesaid embodiments are essentially preferable examples which are not meant to limit the present invention, its application, or its range of application.

### INDUSTRIAL APPLICABILITY

As has been described above, the sliding member forming composition according to the present invention displays excellent wear resistant performance and is useful as a coat layer for sliding members in air conditioners, vehicles, machine tools et cetera. And, a sliding member provided with such a coat layer and a fluid machine provided with such a sliding member are useful, respectively, as a sliding member and as a fluid machine for air conditioners, vehicles, machine tools et cetera.

## Claims

1. A sliding member forming composition which is formed comprising:
a fluororesin;
a binder; and
two or more types of antiwear agents.

2. The sliding member forming composition of claim 1 wherein:
the fluororesin is polytetrafluoroethylene; and
the binder is polyamide-imide resin.

3. The sliding member forming composition of claim 1 wherein:
at least one of the two or more types of antiwear agents is fluoride; and
at least another one of the two or more types of antiwear agents is an antiwear particle having a Mohs hardness of greater than 5.

4. The sliding member forming composition of claim 3 wherein relative to 100 parts by weight of the fluororesin:
(i) the binder is present in an amount of not less than 100 parts by weight nor more than 500 parts by weight;
(ii) the fluoride is present in an amount of not less than 50 parts by weight nor more than 200 parts by weight; and
(iii) the antiwear particle is present in an amount of not less than 1 part by weight nor more than 100 parts by weight.

5. The sliding member forming composition of claim 4 wherein relative to 100 parts by weight of the fluororesin:
(i) the binder is present in an amount of 300 parts by weight;
(ii) the fluoride is present in an amount of 75 parts by weight; and
(iii) the antiwear particle is present in an amount of 25 parts by weight.

6. The sliding member forming composition of claim 3 wherein:
the antiwear particle is aluminum oxide.

7. A sliding member which comprises a metal base material having on the surface thereof a coat layer wherein:
the coat layer is composed of a sliding member forming composition, the sliding member forming composition comprising: a fluororesin; a binder; and two or more types of antiwear agents.

8. The sliding member of claim 7 wherein:
the fluororesin is polytetrafluoroethylene; and
the binder is polyamide-imide resin.

9. The sliding member of claim 7 wherein:
at least one of the two or more types of antiwear agents is fluoride; and
at least another one of the two or more types of antiwear agents is an antiwear particle having a Mohs hardness of greater than 5.

10. The sliding member of claim 9 wherein relative to 100 parts by weight of the fluororesin:
(i) the binder is present in an amount of not less than 100 parts by weight nor more than 500 parts by weight;
(ii) the fluoride is present in an amount of not less than 50 parts by weight nor more than 200 parts by weight; and
(iii) the antiwear particle is present in an amount of not less than 1 part by weight nor more than 100 parts by weight.

11. The sliding member of claim 10 wherein relative to 100 parts by weight of the fluororesin:
(i) the binder is present in an amount of 300 parts by weight;
(ii) the fluoride is present in an amount of 75 parts by weight; and
(iii) the antiwear particle is present in an amount of 25 parts by weight.

12. The sliding member of claim 9 wherein:
the antiwear particle is aluminum oxide.

13. A fluid machine which is provided with a slide member, the slide member comprising a metal base material having on the surface thereof a coat layer wherein:
the coat layer is composed of a sliding member forming composition, the sliding member forming composition comprising: a fluororesin; a binder; and two or more types of antiwear agents.

14. The fluid machine of claim 13 wherein:
the sliding member is a bearing member.

15. The fluid machine of claim 14 wherein:
the fluororesin is polytetrafluoroethylene; and
the binder is polyamide-imide resin.

16. The fluid machine of claim 14 wherein:
at least one of the two or more types of antiwear agents is fluoride; and
at least another one of the two or more types of antiwear agents is an antiwear particle having a Mohs hardness of greater than 5.

17. The fluid machine of claim 16 wherein relative to 100 parts by weight of the fluororesin:
(i) the binder is present in an amount of not less than 100 parts by weight nor more than 500 parts by weight;
(ii) the fluoride is present in an amount of not less than 50 parts by weight nor more than 200 parts by weight; and
(iii) the antiwear particle is present in an amount of not less than 1 part by weight nor more than 100 parts by weight.

18. The fluid machine of claim 17 wherein relative to 100 parts by weight of the fluororesin:
(i) the binder is present in an amount of 300 parts by weight;
(ii) the fluoride is present in an amount of 75 parts by weight; and
(iii) the antiwear particle is present in an amount of 25 parts by weight.

19. The fluid machine of claim 16 wherein:
the antiwear particle is aluminum oxide.
